(19) **Europäisches Patentamt**

**European Patent Office**

**Office européen des brevets**

(11) **EP 1 311 095 B1**

(12) **EUROPEAN PATENT SPECIFICATION**

(45) Date of publication and mention
of the grant of the patent:
**13.12.2006 Bulletin 2006/50**

(51) Int Cl.:
***H04L 27/18*** (2006.01)

(21) Application number: **01925586.8**

(86) International application number:
**PCT/ES2001/000160**

(22) Date of filing: **27.04.2001**

(87) International publication number:
**WO 2002/017585 (28.02.2002 Gazette 2002/09)**

(54) **METHOD FOR SPREAD-SPECTRUM DIGITAL COMMUNICATION BY GOLAY COMPLEMENTARY SEQUENCE MODULATION**

VERFAHREN FÜR DIGITALE SPREIZSPEKTRUM-KOMMUNIKATION DURCH MODULATION MIT GOLAY-KOMPLEMENTÄRSEQUENZEN

PROCEDE POUR LA COMMUNICATION NUMERIQUE DE SPECTRE ETALE PAR MODULATION DE SEQUENCES COMPLEMENTAIRES DE GOLAY

(84) Designated Contracting States:
**AT BE CH CY DE DK ES FI FR GB GR IE IT LI LU MC NL PT SE TR**
Designated Extension States:
**AL LT LV MK RO SI**

(30) Priority: **16.08.2000 ES 200002086**

(43) Date of publication of application:
**14.05.2003 Bulletin 2003/20**

(73) Proprietor: **Diaz Fuente, Vicente**
**28805 Alcala de Henares (Madrid) (ES)**

(72) Inventor: **Diaz Fuente, Vicente**
**28805 Alcala de Henares (Madrid) (ES)**

(74) Representative: **Lahidalga de Careaga, Jose Luis**
**Goya, 143**
**28009 Madrid (ES)**

(56) References cited:
**EP-A- 0 952 461        US-A- 6 095 977**

• **PATENT ABSTRACTS OF JAPAN & JP 09 093 295 A (MATSUSHITA ELECTRIC IND CO LTD) 04 April 1997**

Printed by Jouve, 75001 PARIS (FR)

# EP 1 311 095 B1

**Description**

FIELD OF THE ART

The present invention refers to the modulation and demodulation method as well as the transmitter and receiver which makes it possible to transmit and receive data by means of any transmission means, particularly when it is necessary or preferable to use spread spectrum techniques.

STATE OF THE ART

The spread spectrum concept was developed for use in military communications due to its immunity features towards noise and interference. Its principle is based on the use of certain binary sequences having certain features similar to noise and which, however, a receiver which knows said sequence is capable to detect as a signal. In the same manner the compression of impulses by means of binary sequences is useful also in RADAR, SONAR and echography applications since it allows to improve the resolution of the detected objects. However, in recent years its use has become widespread in space applications and civil communications such as mobile telephony, DS-CDMA (Direct Sequence Code-Division Multiple-Access), radio telephone access loops, Internet access, wireless local area networks, deep space communications, etc. All of which are based on digital modulation by means of using of sequences which are suitable for this type of applications due to their autocorrelation and cross-correlation features are suitable for this kind of applications. Therefore, international organisations (IEEE, UIT, etc.), have begun normalising and standardising modulation systems which facilitates the use of certain sequences to modulate the transmitted binary data and thus obtain characteristics which makes it possible to use, among others, certain frequencies reserved for industrial, scientific and medical applications (ISM bands) and whose use and exploitation do not require any kind of administrative license. The need to send as much information as possible with the same bandwidth has made the telecommunications industry to develop commercial applications which use the IEEE 802.11 standard for the transmission of information by radio in local networks obtaining increasingly higher speeds by means of the use of binary sequences such as the 11-bit Barker (to obtain a minimum processing gain of 10.4 dB) or 5-bit Walsh, and different modulation techniques (BPSK, QPSK, MBOK, QMBOK, etc.) which makes it possible to attain transmission speeds of up to 11 Mbps. This standard makes it possible to work within three frequency bands with a null-to-null bandwidth of 22 MHz, in the so-called 2.4GHz band.

Likewise, reliable transmission methods are needed for the so-called deep space communications between spaceships and the bases on Earth, allowing a big processing gain due to the need to limit the emission power of the ship's transmission equipment, and due to the reduced signal to noise ratio of said signals when they are received.

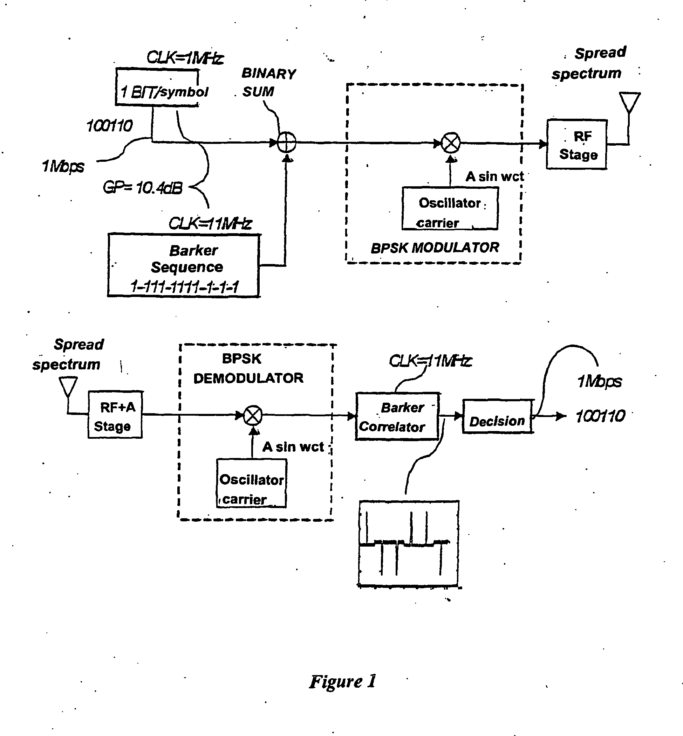

In the present applications (Figure 1) the length of the coding sequence (Barker, PN, Walsh, etc.,....) determines both the processing gain and the bandwidth used. Generally, the transmission speed will be reduced if we attempt to increase the processing gain, which is why a compromise between the two parameters must always be found. The transmission speed may be increased by increasing the number of modulation phases, however, the restrictions of this technique increase with the decrease in the signal to noise ratio during reception.

Based on the above it can be deduced that there is a need for a spread spectrum digital modulation technique which on the one hand makes it possible to increase transmission speed and on the other to obtain a bigger processing gain to make it possible to reduce the needed transmission power or improve the signal to noise ratio during reception, and at the same time to reduce the complexity of the present modulation tables.

And in relation with the documents considered to be relevant mentioned in the International Search Report:

A. First of all, the Patent JP-A-09093295 is an improved method for the codification and correction of data by the combination of convolutional and Golay codes (1, 8, 6) on a QPSK constellation. However, the present application in its simplest version refers to a technique of digital modulation and demodulation of data my means of a spread spectrum by direct sequence (DSSS) in which the sequences used are pairs of complementary Golay sequences.

B. The object of Patent JP-A-09093295 is to codify the data in order to improve the capacity of detection and correction of errors at reception, transmitting the data via QPSK modulation. However, the object of the present application is to modulate the data so as to be able to transmit and receive information and alternate the flow of simultaneous data by means of orthogonal groups of pairs of complementary Golay sequences, without bearing in mind the detection or correction of possible errors in the data received.

C. In the diagram of codification blocks for the Patent JP-A-09093295, page 2, certain differences in the process can be observed:

C.1. In JP-A-09093295, the data is divided into two separate binary flows by means of

(3): one of them goes in to a typical convolutional codification block (4) and the other goes in to a typical Golay codification block (5) (n, k, d) with the following values: n=1, k=8 and d=6. The result is mapped by means of a circuit (6) over both diagonals of a QPSK constellation (Quadrature Phase Shift Keying) and this is transmitted to the medium via some typical QPSK blocks (7, 8, 9).

C.2. In the present application the multilevel data (1) is sent simultaneously to two lineal filters (3 and 4) whose quotients are the values of a pair of Golay complementary sequences respectively, (secA and secB, 2). The outgoing end of both these filters are modulated in Quadrature by means of the product for a sine and cosine respectively, generating an M-QASFC modulation (M-levels Quadrature Amplitude Phase Shift Keying) and not QPSK.

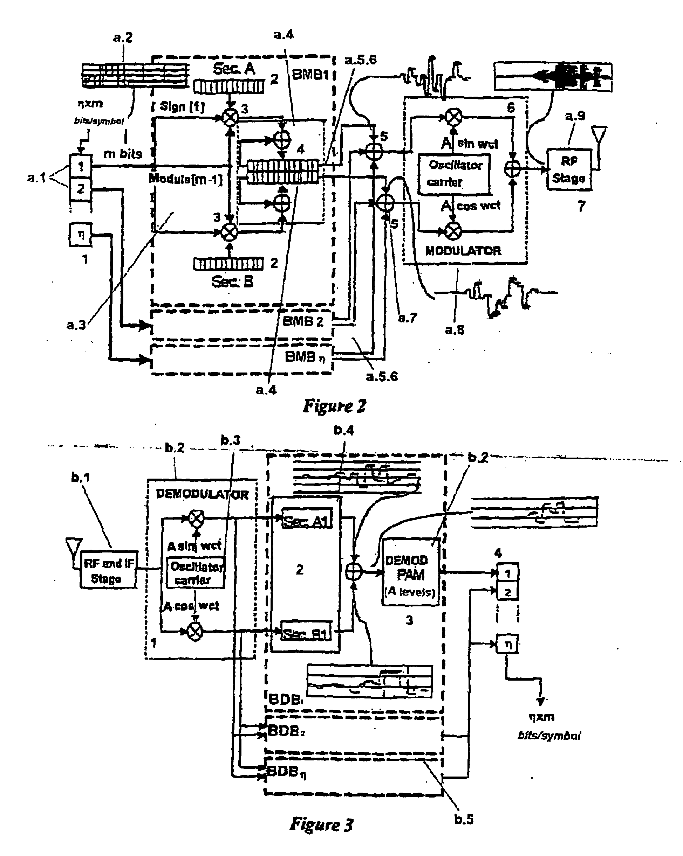

D. The signal transmitted in JP-A-09093295 correspond to a a QPSK modulation, while the signal transmitted using the technique described in the present application always belongs to a multilevel M-QASK modulation, as can be seen in figure 2, blocks (6) and (7) of the patent.

E. In summary, the Patent JP-A-09093295 is a method for coding and decoding which uses a combination of Golay sequences and convolutional codes to improve the detection and correction of errors in the data received. On the other hand, the present application is a method for the DIGITAL MODULATION AND DEMODULATION OF SPREAD SPECTRUM VIA DIRECT SEQUENCE (DSSS) whose sequences correspond to Complementary Golay sequences.

No patent or utility model whatsoever is known whose features are the object of the present invention.

DESCRIPTION OF THE INVENTION

The present invention according to claim 1 uses pairs of Golay complementary sequences for the modulation by means of spread spectrum and DS-CDMA of the amplitude modulated binary data in combination with an N-PSK modulation widely used in digital communication systems.

The main property of the sequences used in this invention is that in contrast to the Barker sequences, which have side lobes, the Golay sequences are characterised by an ideal autocorrelation, that is, they correspond to a perfect Krönecker delta so that they meet:

$$C_A[n] + C_A[n] = \{ \quad \begin{array}{l} 2M, n=0 \\ 0, n \neq 0 \end{array}$$

where $C_A$ and $C_n$ are the individual autocorrelations of the A and B sequences of the pair of selected Golay complementary sequences, *M* lenght; and whose values belong to the bivalued set (1,-1).

The generation of such sequences is based on the so-called kemel basics of 2, 10 and 26 bits, known hitherto (the rules of Golay sequence generation are discussed in the article called "Complementary Sequences" by M.J.E. Golay, published in IRE Transactions on Information Theory, vol. IT-7, pp. 82-87, April 1961).

The communication system object of the present invention makes it possible to establish a physical end-to-end or end-to-multipoint connection at a transmission rate, which will depend on the employed means and on the available bandwidth and on the acceptable error rate.

It consists of two pieces of equipment or devices: One is a transmitter and the other one is a receiver.

The transmitter equipment is used to perform the following tasks:

- Receive the data and generate the symbols corresponding to each group of (*m*) bits as a function of the Golay sequence number ($\eta$) of the selected length (*M*), number of amplitudes (*A*) per symbol, number of phases (*N*) used for the modulation and processing gain needed to comply with the quality requirements of the system.

- Carry out the adding up of the different phases to form an N-PSK modulation and thus generating the transmission signal.

- Transmit the composite signal to the transmitter means for example by means of an RF stage and antenna.

The receiver equipment is used to perform the following operations:

- Demodulate the N-PSK information and extract the components of each of the different phases.

- Adapt, filter and correlate the extracted components with their corresponding complementary pairs or Golay.

- Sum up the correlations and thus obtain the original data stream as digital levels.

- Perform the level decoding to obtain the original data.

The first advantage of this method is that of being able to obtain as big a processing gain as one wishes, independently, as will be seen later, of the transmission rate, and only by increasing the length of the selected Golay sequences, for which reason high transmission power is not needed to obtain a high signal to noise ration during reception. The processing gain (in decibel) in this case is defined as:

$$GP = 10 \ log_{10} \ (2M) \ dB. \ (1.1)$$

where M corresponds to the length of the Golay sequences used in the modulation. This feature is very important in applications where a low transmission power is desired (portable terminals, space ships and communication satellites), the communication is performed over great distances (deep space transmissions), and even military applications in which the interferences caused by the enemy or the need to encrypt the transmission determine the security and quality of the communication.

Furthermore, this method makes it possible to transmit simultaneous information flows in the same frequency bands over the channel by means of using η different low cross-correlation Golay sequences, thus facilitating the creation of η communication subnet works within a same band, or to multiply the transmission rate by a factor proportional to η.

Likewise, it is possible to increase the transmission rate even more if a prior amplitude modulation of the entry data by means of *A* amplitudes is performed.

Therefore, from the aforementioned it can be deduced that the transmission speed, or capacity (C), that can be obtained in a spread spectrum communication system using this method will be:

$$C= \ \eta \ \cdot \ log_2A \ \cdot \ (1/2) \ \cdot \ log_2N \ \cdot \ (B/2) \qquad bits/sec.$$
$$(1.2)$$

where B (Hertz) is the null-to-null bandwidth used, N is the number of phases used in the modulation (power of 4), *A* is the number of amplitudes used in the binary data encoding and η is the number of pairs of Golay complementary sequences used. In the previous expression it is observed that *C* is independent of *M*.

Therefore, the described invention constitutes a powerful communication system for use in spread spectrum applications, DS-CDMA, hostile environments, when restrictions on the transmission power exists, or simply when there is a wish to improve the quality of the communication without a transmission rate degradation.

BRIEF DESCRIPTION OF THE DRAWINGS

Figure 1 shows the present basic transmission technique of a spread spectrum system and particularly using an 11-bit Barker sequence, which by means of a exclusive OR function performs the spreading of the spectrum of the original data signal. It is seen that the bit frequency is 11 times lower to the one used for the Barker sequence, which makes it possible to obtain a processing gain of *10 · log10 (11)* ≈ 10.4 dB.

Figure 2 shows the basic elements of the transmission method and a possible implementation of the transmitter (a) this apparatus, is made up of the following elements:

(a) Transmitter apparatus: formed by at least the following parts:

a.1. <u>Receiver</u>.
a.2. <u>Encoder</u>: where the NRZ digital data received is encoded and grouped together.
a.3. <u>Golay register</u>: formed by two binary registers of length M storing a pair of complementary Golay

sequences.

a.4. <u>Multiplier</u>: formed by two multipliers with a symbol.

a.5.6 <u>Double accumulator and shift register</u>: a double accumulator for performing the arithmetic additions of the result of the multipliers and this result is added with the content of shift register, being formed by basic elements which store the signal values.

a.7. <u>Adder</u>: independently adds up the data corresponding to the output of each register.

a.8. <u>QPSK modulator</u>: modulates the output signals of the adders obtaining the transmission signal and QPSK.

a.9. <u>Exit stage</u>: formed by two substages:

a.9.1. <u>D/A converter stage</u>.

a.9.2. <u>Conventional radio frequency stage.</u>

Figure 3 shows the basic elements of the receiver apparatus (b) and the basic outline of a possible implementation.

(b) Receiver apparatus: formed by at least the following parts:

b.1. <u>QPSK receiver</u>: amplifies the RF into IF signals from the exit stage a.9.

b.2. <u>Demodulator</u>: recovers the different digitalised flows in phases I and Q.

b.3. <u>Golay correlators</u>: correlate the different flows received with their corresponding Golay sequences.

b.4. <u>Adder and detector</u>: performs the addition of the correlations.

b.5. <u>Decoder</u>: performs the grouping of the η groups received.

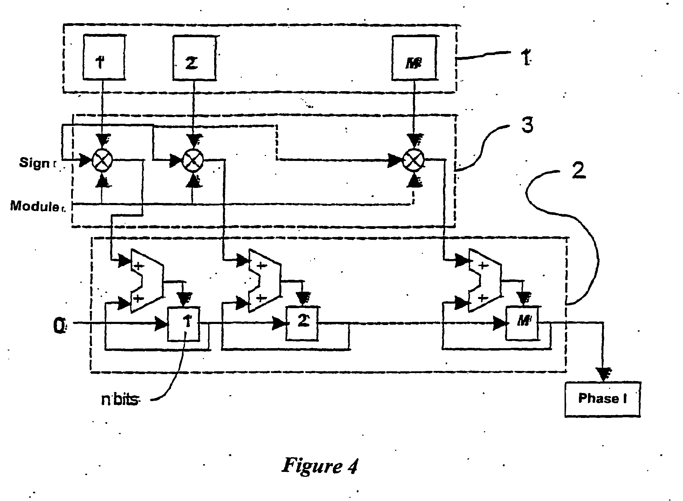

Figure 4 corresponds to a possible embodiment of the modulation. For the sake of simplification only the embodiment of phase 1 is shown. Phase Q is identical but modulating with the complementary sequence. Therefore, only one of the Golay registers (1), one of the accumulators and shift registers (2) and one multiplier (3) is shown.

PREFERRED EMBODIMENT

A possible embodiment of this method applied to a end-to-end open-air radio communication system is shown below. For reasons of clarity the implementation in the case of a QPSK transmitter (*N=4*) is outlined in figure 2, performing data modulation using η Golay sequences, amplitude modulated by means of *A* amplitudes. Therefore, by applying the formula (1.2), the transmission rate will be:

$$C = \eta \cdot \log_2 A \cdot (B/2) \qquad \text{bits/sec.}$$
$$(1.3)$$

In accordance with what has been explained above, the starting point is a set of η pairs of Golay sequences of M bits generated and stored in the transmitter by means of, generally, *2xη* binary registers (values 1 and -1) which we aim to amplitude modulate with A amplitudes and with 4 Q PSK phases (4-PSK). In the same figure 2 one of the basic modulator blocks (BMB) of which the transmitter consists is shown in detail.

The transmitter performs the following operations where R is the transmission rate in symbols:

(1) *Encoder (a.2.)*: The NRZ digital data received at DxmxR bits/sec. arrive encoded and are grouped in η groups of $m=\log_2 A$ bits. Each BMB processes in parallel a group of m bits, so that the system will transmit *nxm* bits per symbol. The bit with the highest weight of each group corresponds to the sign, and the m-1 of less weight, to the module.

(2) *Golay register (a.3.)*: Formed by two binary registers of *M* length which store the pair of A and B complementary sequences whose values belong to the set (1, - 1), which will modulate the data processed by the corresponding BMB.

(3) *Multiplier (a.4.)*: Consists of two multipliers with sign (highest weight bit) of the pair of A and B Golay sequences of the BMB with the arithmetic value of the corresponding group within the set of groups of the input symbol.

(4) *Double accumulator and shift register (a. 5. 6)* : Perform the arithmetic summing of the result of the multipliers with the content of the double shift register (the upper path with A and the inner path with B) and shifts a register to the right for each symbol cycle, updating the register, located furthest to the left of the same, to the value of zero. The shift register is formed by basic elements which store signal values, and therefore, the number ($\eta$) of bits used in each basic element of said register, must be dimensioned to avoid overflow during the accumulation operations. Thus, the number of elements in the shift register must be equal to or higher than *M* for each of the paths A and B.

(5) *Adder (a.6.)*: Independently sums up the data corresponding to the output of each shift register of each of the BMBs thus obtaining the total $I_T$ and $Q_T$ signals which are afterwards modulated.

(6) *QPSK modulator (a.8.)*: Modulates the output signals from the adder by multiplying the exit signals of the adders by two quadrature symbols, for example, a sinusoidal symbol with phase $\varphi_V$ (via $I_T$) and another quadrature $\Phi 0 - \pi/2$ (via $Q_T$), and adding the result of both phases, thus obtaining the transmission signal in QPSK.

(7) *Exit stage (a.9.):* Consists of a D/A converter stage and a conventional radio frequency stage, for example, sending the signal to the transmission means.

Figure 3 shows an example outline of a receiver for *N=4,* which is formed by $\eta$ basic demodulator blocks (BDB) detailed in the same figure, and the structure of the receiver which consists of the following blocks:

(1) *QPSK receiver (b.1.)*: Amplifies the RF input signal and if necessary converts the signal to an intermediate frequency (IF), obtains the phase information and makes it possible to demodulate and recover the different flows in-phase I and cuadrature Q corresponding to the phases $\Phi_0$ and $\Phi 0 - \pi/2$. The I and Q signals are digitised and their output passed on to the correlator blocks. This block is common for all the BDBs.

(2) *Golay correlators (b.3.)*: Makes it possible to correlate the different flows received with their corresponding Golay sequences. Given that the sequences are normalised between +1 and -1, the correlation is reduced to performing adding and subtraction.

(3) *Adder and detector (b.4.):* Performs the adding up of the correlations, two and two, so that the result are the original amplitude modulated data. These are thresholded and converted into binary data generated at the symbol rate at the output of each block.

(4) *Decoder (b.5.):* Performs the grouping of the $\eta$ groups received within the data stream, corresponding to the transmitted data in the order in which they were transmitted at $\eta x m x R$ bits/sec.

Both devices together make up the transmission system.

In general, for the following Figures 1, 2, 3 and 4 we can extend the concept of the function.

We have already stated that "figure 1 shows the present basic transmission technique of a spread spectrum system and particularly using an 11-bit Barker Sequence, which by means of a n exclusive OR function performs the spreading of the spectrum of the original data signal. It is seen that the bit frecuency is 11 times lower that the one used for the Barker sequences, which makes it possibles to obtain a processing gain of *10 · log10 (11)* = 10.4 dB".

Figure 2 shows the basic outline of the transmission method, and a possible implementation of the transmitter which uses this method for *N=4.* The binary data (1) enters the emitter in groups of $\eta x m$ bits. Each *i* group of *m* bits multiplies with sign (3) by both Golay sequences A and B (2) corresponding to the eMB *i* number. The result of both multipliers independently accumulates in each of the phases, and in each element, within the displacement register (4) and moves towards the right to wait for the next symbol.

The output values of the shift register of each BMB are added (5) and the result is sent to a conventional transmission stage (7).

Figure 3 shows a basic outline of the reception method and particularly an example of a receiver (b) using this method for *N=4.* Both phases are reduced by a 4-PSK demodulation obtaining one in-phase signal and another in quadrature (1). The obtained analogue in-phase (I) and quadrature (Q) are quantified and introduced into all BDBs, and the result of both is correlated with the corresponding original sequences (2), the sum (3) of both flows will provide us with an amplitude coded signal corresponding to the data of each subgroup of *m* original bits which are demodulated. A multiplexer block (4) manages the decoding and arrangement of the bits to recover the original data flow.

Figure 4 corresponds to a possible embodiment of the modulation. For the sake of simplification, only the embodiment of phase 1 is shown. Phase Q is identical but modulating with the complementary sequence. Therefore, only one of the Golay registers (1), one of the accumulators and shift registers (2) and one multiplier (3) are shown.

**Claims**

1. A method of digital communication using a signal with Golay complementary sequence spread spectrum modulation, in which method binary input data, when being transmitted, are subjected to grouping in $\eta$ groups of $m=\log_2 A$ bits, amplitude modulation with A amplitudes, spectrum spreading by $\eta$ pairs of complementary Golay sequences, modulation by means of N-PSK modulation, transmission through a communication channel; when being received, phase demodulation, convolution with corresponding Golay complementary sequences, amplitude demodulation, and forming of the original data.

2. The method according to claim 1, **characterized by** using Golay complementary sequences with low cross-correlation.

3. The method according to claim 2, **characterized in that** products of the input data and the Golay complementary sequences are summed all together.

4. The method according to claim 3, **characterized by** using a double shift registers for changing a phase of the complementary Golay sequences.

5. The method according to claim 4, **characterized by** modulating the obtained sum by means of the N-PSK modulation.

6. The method according to claim 2, **characterized by**

(a) introducing the amplitude modulated binary input data grouped in groups of m bits into $\eta$ basic modulator blocks BMB;
(b) storing a pair of Golay complementary sequences whose values are within the range of 1 and -1 in double shift registers of length M in said BMBs;
(c) obtaining a product of the Golay complementary sequences and the corresponding group of m bits, whose sign corresponds to a sign of the heaviest bit and whose module is represented by the other m- 1 bits, which will form sequences I and Q, each of M elements length;
(d) accumulating in each double shift register of length M with corresponding M elements, element by element, M values of each of the sequences obtained at the stage (c);
(e) displacing the content of said registers towards the Mth element, and adding the value zero in the elements of lower order of said registers;
(f) obtaining the total sequences $I_T$ and $Q_T$ by summing the $\eta$ values obtained independently at the output of the sequences I and Q of each of the BMBs;
(g) modulating the sequences $I_T$ and $Q_T$ by means of QPSK modulation, and summing results of the modulation to obtain a transmission signal;
(h) transmitting the obtained signal to a transmission means.

7. The method according to claim 1, **characterized by**

(a) adapting and synchronizing the signal received, recovering the quadrature sequences by phase demodulation, and inserting the sequences into each of $\eta$ basic demodulator blocks BDBs;
(b) convoluting said sequences with the $\eta$ pairs of Golay complementary sequences by means of correlation or matched filtering;
(c) summing results of the convolution, corresponding to the same pair of Golay complementary sequences to obtain $\eta$ information streams modulated in amplitude with A amplitudes;
(d) obtaining $\eta$ groups of $m=\log_2 A$ bits by amplitude demodulation;
(e) forming the original data flow by multiplexing said $\eta$ groups.

**Patentansprüche**

1. Verfahren für digitale Kommunikation unter Verwendung eines Signals mit Spreizmodulation mit komplementärer Golay-Sequenz, wobei binäre Eingabedaten, bei der Übertragung, der Einteilung in $\eta$ Gruppen von $m=\log_2 A$ Bits, der Amplitudenmodulation von A Amplituden, der Spektrumspreizung mittels $\eta$ Paaren komplementärer Golay-Sequenzen, der Modulation mittels N-PSK Modulation, der Übertragung durch einen Kommunikationskanal unterzogen werden; beim Empfang, der Phasendemodulation, der Faltung mit entsprechenden komplementären Golay-Sequenzen, der Amplitudendemodulation, und der Bildung der Originaldaten unterzogen werden.

**2.** Verfahren nach Anspruch 1, **dadurch gekennzeichnet, dass** komplementäre Golay-Sequenzen mit geringer Kreuzkorrelation verwendet werden.

**3.** Verfahren nach Anspruch 2, **gekennzeichnet durch** die Produkte der Eingangsdaten und die komplementären Golay-Sequenzen **gekennzeichnet**.

**4.** Verfahren nach Anspruch 3, **dadurch gekennzeichnet, dass** doppelte Schieberegister für den Wechsel einer Phase der komplementären Golay-Sequenzen verwendet werden.

**5.** Verfahren nach Anspruch 4, **dadurch gekennzeichnet, dass** die erhaltene Summe mittels N-PSK-Modulation moduliert wird.

**6.** Verfahren nach Anspruch 2, **dadurch gekennzeichnet, dass**

(a) die amplitudenmodelierten binären Eingabedaten, die in Gruppen von m Bits in $\eta$ basischen Modulatorblök-ken BMB gruppiert werden, eingeführt werden;
(b) ein Paar komplementärer Golay-Sequenzen, deren Werte innerhalb des Bereiches 1 und -1 liegen, in doppelten Schieberegistern der Länge M in den genannten BMBs gespeichert werden;
(c) ein Produkt aus den komplementären Golay-Sequenzen und der aus m Bits bestehenden entsprechenden Gruppe erhalten wird, dessen Vorzeichen einem Vorzeichen des schwersten Bits entspricht und dessen Modul durch die anderen m-1 Bits dargestellt wird, welche Sequenzen I und Q mit je einer Länge von M Elementen bilden werden;
(d) in jedem doppelten Schieberegister der Länge M mit den entsprechenden M Elementen, Element für Element, M Werte für jede der im Schritt (C) erhaltenen Sequenzen, akkumuliert werden;
(e) der Inhalt der genannten Register zum Mten Element verschoben wird und der Wert null den Elementen tieferer Ordnung der genannten Register hinzugefügt wird;
(f) die totalen Sequenzen $I_T$ und $Q_T$ durch die Summierung der $\eta$ Werte, die unabhängig in der Ausgabe der Sequenzen I und Q jedes BMBs erhalten wurden, erhalten werden;
(g) die Sequenzen $I_T$ und $Q_T$ mittels QPSK-Modulation moduliert werden und die Resultate der Modulationen summiert werden, damit ein Übertragungssignal erhalten wird;
(h) das erhaltene Übertragungssignal an ein Übertragungsmedium übertragen wird;

**7.** Verfahren nach Anspruch 1, **dadurch gekennzeichnet, dass**

(a) das empfangene Signal adaptiert und synchronisiert wird, die Quadratursequenz mittels Phasendemodulation zurückerlangt wird und der Einführung der Sequenzen in jeden der $\eta$ basischen Demodulatorblöcken BDBs;
(b) die genannten Sequenzen mit den $\eta$ Paaren von komplementären Golay-Sequenzen mittels Korrelation oder signalangepasstem Filtern gefaltet werden;
(c) die Resultate der Faltung, entsprechend den gleichen Paaren von komplementären Golay-Sequenzen um $\eta$ amplitudenmodellierte Informationsströme mit A Amplituden summiert werden;
(d) $\eta$ Gruppen von m=$\log_2 A$ Bits mittels Amplitudendemodellation erhalten werden;
(e) der Originaldatenfluss durch multiplexieren der genannten $\eta$ Gruppen gebildet wird.

## Revendications

**1.** Procédé de communication numérique employant un signal avec modulation de spectre élargi de séquence complémentaire de Golay, procédé dans lequel les données d'entrée binaires, lors de leur transmission, sont soumises à un regroupement en $\eta$ groupes de m = $\log_2 A$ bits, modulation en amplitude avec A amplitudes, élargissement de spectre par $\eta$ paires de séquences Golay complémentaires, modulation au moyen de modulation N-PSK, transmission à travers un canal de communication; lors de leur réception, démodulation de phase, convolution avec séquences complémentaires de Golay correspondantes, démodulation d'amplitude et formation des données originales.

**2.** Procédé selon la revendication 1, **caractérisé par** l'utilisation de séquences complémentaires de Golay avec une corrélation croisée basse.

**3.** Procédé selon la revendication 2, **caractérisé par** les produits des données d'entrée et les séquences complémentaires de Golay.

**4.** Procédé selon la revendication 3, **caractérisé par** l'utilisation de registres de déplacement double pour changer une phase des séquences de Golay complémentaires.

**5.** Procédé selon la revendication 4, **caractérisé par** la modulation de la somme obtenue au moyen de la modulation N-PSK.

**6.** Procédé selon la revendication 2, **caractérisé par**

(a) l'introduction des données d'entrée binaires modulées en amplitude regroupées dans des groupes de m bits en η blocs modulateurs de base BMB.

(b) le stockage d'une paire de séquences complémentaires de Golay dont les valeurs sont dans l'intervalle de 1 et -1 dans des registres de déplacement double de longueur M dans lesdits BMBs;

(c) l'obtention d'un produit de séquences complémentaires de Golay et le groupe correspondant de m bits, dont le signe correspond à un signe du bit le plus lourd et dont le module est représenté par les autres m - 1 bits qui formeront des séquences I et Q chacune d'une longueur de M éléments.

(d) l'accumulation, dans chaque registre de déplacement double de longueur M avec M éléments correspondants, élément par élément, de M valeurs de chacune des séquences obtenues dans l'étape (c);

(e) le déplacement du contenu desdits registres vers l'élément d'ordre M, et l'adition de la valeur zéro dans les éléments d'ordre inférieure desdits registres;

(f) l'obtention des séquences totales $I_T$ et $Q_T$ au moyen de la somme des η valeurs obtenues indépendamment à la sortie des séquences I et Q de chacun des BMBs;

(g) la modulation des séquences $I_T$ et $Q_T$ au moyen de la modulation QPSK, et l'adition des résultats de la modulation pour obtenir un signal de transmission;

(h) la transmission du signal obtenu à un moyen de transmission.

**7.** Procédé selon la revendication 1, **caractérisé par**

(a) l'adaptation et la synchronisation du signal reçu, la récupération des séquences en quadrature au moyen de la démodulation de phase, et l'insertion des séquences dans chacun des η blocs démodulateurs de base BDB;

(b) la convolution desdites séquences avec les η paires de séquences complémentaires de Golay au moyen de la corrélation ou filtre adapté;

(c) l'adition des résultats de la convolution, correspondants à la même paire de séquences complémentaires de Golay pour obtenir η courants d'information modulés en amplitude avec A amplitudes;

(d) l'obtention de η groupes de m=$\log_2 A$ bits au moyen de démodulation d'amplitude;

(e) la formation du flux de données originales au moyen du multiplexage de η groupes.

*CLK=1MHz*

1 BIT/symbol

**BINARY SUM**

**Spread spectrum**

100110

1Mbps

GP= 10.4dB

*CLK=11MHz*

Barker Sequence
1-111-1111-1-1-1

A sin wct

Oscillator carrier

**BPSK MODULATOR**

RF Stage

**Spread spectrum**

RF+A Stage

**BPSK DEMODULATOR**

A sin wct

Oscillator carrier

*CLK=11MHz*

Barker Correlator

Decision

1Mbps

100110

*Figure 1*

**Figure 2**

**Figure 3**

Figure 4